# EUROPEAN PATENT SPECIFICATION

(11) **EP 4 558 721 B1**
(45) Date of publication and mention of the grant of the patent: **10.06.2026**
(21) Application number: 23745404.6
(22) Date of filing: 20.07.2023
(51) Int. Cl.: F03D 1/06

(54) **IMPROVEMENTS RELATING TO MODULAR WIND TURBINE BLADES**
VERBESSERUNGEN AN MODULAREN WINDTURBINENSCHAUFELN
AMÉLIORATIONS SE RAPPORTANT À DES PALES D'ÉOLIENNE MODULAIRES

(30) Priority: 22.07.2022 DK PA202200711
(43) Date of publication of application: 28.05.2025
(73) Proprietor: VESTAS WIND SYSTEMS A/S, 8200 Aarhus N (DK)
(72) Inventor: BARTON, Leon, 8200 Aarhus N (DK); SANDERCOCK, Stephen, 8200 Aarhus N (DK)
(74) Representative: Vestas Patents Department
(86) International application number: PCT/DK2023/050190
(87) International publication number: WO 2024/017449

(56) References cited:
- EP-A1- 3 098 440
- EP-A1- 3 308 013
- EP-A2- 2 591 230
- US-A1- 2019 055 921

## Description

### Technical field

The present invention relates generally to modular wind turbine blades and more specifically to a method of assembling a modular wind turbine blade.

### Background

There is a continuing desire to generate increased levels of power from onshore and offshore wind farms. One way to achieve this is to provide modern wind turbines with larger wind turbine blades to increase the swept area of the rotor such that the wind turbine captures more energy from the wind. A wind turbine blade may be designed as a modular assembly formed of two or more blade modules to facilitate transport of the components. The blade modules may then be connected together at the wind farm site to form the blade. Modern wind turbine blades typically include a reinforcing spar structure to provide structural support to an outer shell of the blade. A spar structure typically comprises longitudinally-extending spar caps that absorb bending loads experienced by the blade in use. Spar caps of adjacent blade modules may be connected to transfer loads across the interface between the blade modules. In some examples, a modular wind turbine blade may include a connecting element, such as a spar bridge, to connect a spar cap of one blade module to a corresponding spar cap of an adjacent blade module.

The spar bridge may be a separate spar component configured for connection between the corresponding spar caps of the adjacent blade modules. However, use of a spar bridge to connect the spar caps can introduce a number of challenges. For example, it can be difficult to achieve a consistent bond gap thickness between interfacing surfaces of the spar caps and the spar bridge due to manufacturing tolerances of these components. Further, because modular wind turbine blades are typically assembled at or near to a wind turbine site, on-site assembly constraints can also complicate alignment of the spar caps and the spar bridge. Inaccuracies or inconsistencies in the connection between the spar caps and spar bridge can cause stress concentrations when the modular wind turbine blade is loaded in use. Document EP3308013A1 is a prior art example disclosing a method of assembling a modular wind turbine blade.

It is against this background that the present invention has been developed.

### Summary

According to the present invention there is provided a method of assembling a modular wind turbine blade comprising first and second blade modules connectable together at an interface to form at least part of the modular wind turbine blade. The method comprises providing a first blade module and a second blade module. Each blade module comprises an outer shell defining an outer surface of the blade module, a connecting region of the outer shell defining an interface end of the blade module, and a longitudinally-extending spar cap embedded in the outer shell. The spar cap has a tapered end portion in the connecting region in which the thickness of the spar cap decreases towards the interface end of the blade module such that a tapered recess is defined in the outer surface of the blade module. The method further comprises arranging the first and second blade modules end-to-end with the tapered recesses aligned to define a bridge recess. The tapered recess of the first blade module defines a first end of the bridge recess, and the tapered recess of the second blade module defines a second end of the bridge recess. The method further comprises arranging a stack of layers in the bridge recess and spanning the interface between the first and second blade modules. The stack of layers comprises a plurality of pre-cured layers interleaved with pre-preg interlayers. The pre-preg interlayers comprise fibrous material that is pre-impregnated with uncured resin. The method further comprises applying heat to the stack of layers in the bridge recess such that the resin in the pre-preg interlayers mobilises in the bridge recess. The method further comprises curing the resin to integrate the pre-cured layers with each other to form a spar bridge spanning the interface, the spar bridge serving to connect the spar caps of the first and second blade modules.

The pre-cured layers preferably comprise reinforcing fibres fixed in a cured polymer resin matrix. For example, the pre-cured layers may comprise carbon fibre reinforced polymer (CFRP). In preferred examples, the pre-cured layers are pultrusions, such as CFRP pultrusions. The use of pultrusions is advantageous because a pultrusion process enables close control of fibre orientation in the pre-cured layers. Accordingly, pultrusions may comprise longitudinally-extending reinforcing fibres in a highly uniform arrangement, which improves the strength of the spar bridge.

The pre-preg interlayers comprise fibrous material that is pre-impregnated with an uncured resin prior to arrangement between pre-cured layers. In some examples, the pre-preg interlayers may comprise woven fibres, unidirectional fibres, biaxial fibres, multiaxial fibres, or fibres in the form of a chopped strand mat. Uncured resin comprises various separate polymer chains that are not bonded together, i.e. not crosslinked. Accordingly, curing the resin to integrate the pre-cured layers with each other comprises crosslinking the polymer chains in the resin. Crosslinking the polymer chains may occur at ambient temperature, or in some examples, heat may be applied to the stack of layers in the bridge recess to promote crosslinking of the polymer chains to cure the resin.

The stack of layers arranged in the bridge recess preferably comprises pre-preg interlayers interleaved between each pair of adjacent pre-cured layers. This helps to ensure that resin, i.e. the resin in the pre-preg interlayers, is provided between each pair of adjacent layers. This in turn helps to ensure that all of the pre-cured layers in the stack are thoroughly bonded together, minimising voids and/or dry spots between the pre-cured layers and thereby minimising stress concentrations in the spar bridge when the spar bridge transfers loads between the spar caps of the first and second blade modules in use.

Providing the spar bridge as a stack of pre-cured layers interleaved with pre-preg interlayers means that the stack of layers has some flexibility in the bridge recess prior to curing the resin in the pre-preg interlayers. In other words, the pre-cured layers, or at least the ends of the pre cured layers may move relative to one another in the bridge recess. The initial flexibility of the un-cured spar bridge in the bridge recess means that the layers in the stack can conform to the profiles of the recesses of the first and second blade modules. This flexibility of the un-cured spar bridge, and the facility for relative movement between the ends of the pre-cured layers, means that the geometry of the spar bridge adapts to the tapered end portions of the spar caps, and alleviates any misalignments or inaccuracies in the connection between the spar caps and the spar bridge.

In some examples, applying heat to the stack of layers in the bridge recess may comprise heating the stack of layers to at least 60°C, preferably at least 70°C, more preferably at least 80°C. Heating the stack of layers to at least 60°C initially reduces the viscosity of the resin in the pre-preg interlayers, causing the resin to thoroughly permeate throughout the bridge recess. Further, heating the stack of layers to the above-mentioned temperatures may promote cross-linking of the polymer chains in the resin to accelerate the curing process, thereby reducing the total time required to assemble the modular wind turbine blade on-site.

In some examples, applying heat to the stack of layers in the bridge recess may comprise arranging heating apparatus, such as a heating blanket, in the connecting region.

Accordingly, the stack of layers may be heated from outside of the modular blade. The use of heating apparatus may facilitate targeted application of heat to the bridge recess. As such, the use of heating apparatus may help to avoid overheating adjacent portions of the outer shell when forming the spar bridge.

In some examples, prior to curing the resin, the method may further comprise arranging a vacuum film over the stack of layers in the bridge recess to define a sealed region containing the stack. The method may also comprise evacuating the sealed region under vacuum pressure to consolidate the stack of layers in the bridge recess such that the stack conforms to the profiles of the recesses of the first and second blade modules. Consolidating the stack of layers in the bridge recess under vacuum pressure applies an additional force to the stack, pressing the layers of the stack into the bridge recess to further ensure that the pre-cured layers are accurately aligned in the bridge recess.

The tapered end portion of each spar cap preferably defines a scarfed surface configured for connection to the spar bridge. Evacuating the sealed region under vacuum pressure to consolidate the stack of layers in the bridge recess preferably causes the stack to conform to the scarfed surfaces of the spar caps. Accordingly, consolidating the stack of layers in the bridge recess may help to ensure that the pre-cured layers in the stack are brought into contact, i.e. direct or indirect contact, with the scarfed surfaces of the spar caps. In particular, consolidating the stack in the bridge recess helps to minimise gaps or voids between the pre-cured layers in the stack and the spar caps of the first and second blade modules. This helps to provide continuous load paths between the spar caps of the first and second blade modules, to transfer loads between the spar caps via the spar bridge in use.

Each pre-cured layer preferably comprises a single pre-cured component, such as a single pre-cured pultrusion. As such, each pre-cured layer in the stack preferably comprises a single component extending between the spar caps of the first and second blade modules. Such a configuration further helps to provide continuous load paths for transferring loads between the spar caps of the first and second blade modules in use.

In some examples, arranging the stack of layers may comprise arranging successively longer pre-cured layers in the bridge recess to form a spar bridge having a first end that tapers in thickness and a second end that tapers in thickness. For example, the method may comprise arranging successively longer pultrusions in the bridge recess. The tapered ends of the spar bridge preferably define scarfed surfaces configured for connection to the scarfed surfaces of the spar caps of the first and second blade modules. For example, the rate of taper of the first end of the stack of layers preferably matches the rate of taper of the tapered end portion of the spar cap of the first blade module, and the rate of taper of the second end of the stack of layers preferably matches the rate of taper of the tapered end portion of the spar cap of the second blade module. Such a configuration helps to minimise variations in the thickness of the bond gap between the scarfed surfaces of the spar caps and the corresponding scarfed surfaces of the spar bridge.

In preferred examples, at least some of the pre-preg interlayers may extend longitudinally beyond the ends of their adjacent pre-cured layers. Arranging the pre-preg interlayers to extend beyond ends of their adjacent pre-cured layers helps to ensure that pre-preg interlayer material, and in particular the resin in the pre-preg, is provided between the ends of adjacent pre-cured layers to ensure these ends are thoroughly bonded together when the resin is cured. Further, in some examples, the pre-preg interlayers extending beyond the ends of their adjacent pre-cured layers may help to bond the pre-cured layers to the respective tapered end portions of the spar caps.

The spar caps of the first and second blade modules may comprise an electrically conductive material. In such examples, the pre-preg interlayers preferably comprise an electrically conductive material. The stack of layers is preferably arranged in the bridge recess with the pre-preg interlayers in electrical contact with at least one of the spar caps. As such, the electrically conductive pre-preg interlayers may help to conduct electrical currents between the spar caps of the first and second blade modules, i.e. across the interface between the blade modules, in the event of lightning striking the blade, for example. The electrically conductive pre-preg interlayers may therefore reduce the risk of electrical arcs or flashovers between the electrically conductive spar caps, by providing a safe path for conducting the electrical current. "Electrical contact" may be achieved via direct contact between the pre-preg interlayers and a spar cap, or indirect electrical contact, i.e. the pre-preg interlayers may in electrical contact with a spar cap via another electrically conductive material.

In some examples, the pre-cured layers may also comprise an electrically conductive material. Arranging the electrically conductive pre-preg interlayers as described above may also help to minimise the risk of electrical arc or flashovers between the spar caps and the pre-cured layers in such an example.

In preferred examples, at least some of the pre-preg interlayers have a greater width than their adjacent pre-cured layers. Such a configuration helps to ensure that resin is provided across the full width of the pre cured layers to ensure that the pre-cured layers are thoroughly bonded to their respective adjacent pre-cured layers when the resin is cured. Accordingly, the risk of dry spots or voids between adjacent pre-cured layers is minimised.

The pre-preg interlayers preferably comprise excess resin. As such, the pre-preg interlayers preferably comprise more resin than the resin required to integrate the pre-cured layers with each other to form the spar bridge. Firstly, the excess resin helps to ensure that sufficient resin is provided to integrate the pre-cured layers with each other. However, more particularly, the excess resin may help to fill any empty spaces throughout the bridge recess. For example, when heat is applied to the stack of layers, causing the resin in the pre-preg interlayers to mobilise in the bridge recess, the excess resin permeates throughout the bridge recess, including locations where pre-preg material is not arranged. The excess resin may therefore help to provide continuous load paths through the spar bridge by minimising voids in the spar bridge and thereby minimising the risk of stress concentrations forming in the spar bridge in use.

In preferred examples, the pre-preg interlayers may comprise a fibre volume fraction (FVF) from 30% to 70%, preferably from 45% to 55%, such as 50%. The FVF is the ratio of fibre to resin by volume in the material.

In some examples, curing the resin may integrate the pre-cured layers with the tapered end portions of the spar caps. In other words, the resin in the pre-preg interlayers may bond the pre-cured layers of the spar bridge to the tapered end portions of the spar caps of the first and second blade modules. The provision of pre-preg interlayers comprising excess resin may be particularly advantageous in such examples, because the excess resin may be used to integrate the pre-cured layers with the tapered end portions of the spar caps. Accordingly, such a configuration may advantageously reduce the number of process steps involved in assembling the modular wind turbine blade.

In some examples the method may comprise arranging pre-preg fibrous material in the recesses of the first and second blade modules prior to arranging the stack of layers in the bridge recess. In such examples, the pre-cured layers forming the spar bridge may be integrated with, i.e. bonded to, the tapered end portions of the spar caps by the resin in the pre-preg fibrous material arranged in the recesses. It follows that the step of curing the resin may involve curing both the resin in the pre-preg interlayers, and the resin in the pre-preg fibrous material.

Pre-preg fibrous material is fibrous material that is pre-impregnated with an uncured resin prior to arrangement in the recesses of the first and second blade modules. In some examples, the pre-preg fibrous material may comprise woven fibres, unidirectional fibres, biaxial fibres, multiaxial fibres, or fibres in the form of a chopped strand mat.

Arranging pre-preg fibrous material in the recesses of the first and second blade modules, i.e. between the scarfed surfaces of the spar caps and the corresponding surfaces of the spar bridge, is particularly advantageous for forming a strong connection between the spar bridge and the spar caps. For example, manufacturing and assembly tolerances may result in small misalignments between the scarfed surfaces of the spar caps and the pre-cured layers of the spar bridge when the layers are arranged in the stack in the bridge recess. As such, the bond gap defined between the spar cap and a corresponding end of the spar bridge may vary in thickness. The arrangement of pre-preg fibrous material between the spar cap and spar bridge advantageously alleviates potential risks related to a varying bond gap thickness. For example, the pre-preg fibrous material advantageously provides a cushioning effect when connecting the spar bridge to the spar caps. The pre-preg fibrous material comprises fibrous material and uncured resin, and is therefore configured to conform to the contours of the surfaces between which it is arranged. The pre-preg fibrous material cushions variations in the surfaces, i.e. smoothing out misalignments and minor surface defects, by filling any recesses or discontinuities in said surfaces.

Further, the provision of pre-preg fibrous material between the spar caps and the spar bridge ensures that resin is provided throughout the bond gap such that there are no dry spots or voids between the spar caps and the spar bridge. Heating the stack of layers in the bridge recess may additionally involve heating the pre-preg fibrous material arranged in the recesses of the first and second blade modules. When heated, the viscosity of the resin in the pre-preg fibrous material decreases initially such that the resin mobilises throughout the bond gap to fill any variations or discontinuities in the interfacing surfaces of the spar caps and the spar bridge.

In examples where pre-preg fibrous material is arranged in the recesses of the first and second blade modules, such pre-preg fibrous material preferably comprises an electrically conductive material. For example, the pre-preg fibrous material may comprise carbon fibre. The pre-preg fibrous material arranged between the spar caps and the spar bridge may therefore facilitate the conduction of electricity between the spar caps and the spar bridge. In the event of a lightning strike, the conductive fibrous material in the recesses advantageously ensures continuous electrical conductivity between the spar caps and spar bridge to thereby avoid electrical arcs, or "flashovers", which could damage the outer shell of the blade modules.

In examples where pre-preg fibrous material is arranged in the recesses of the first and second blade modules, i.e. between the spar caps and the spar bridge, the pre-preg interlayers and/or the pre-cured layers of the spar bridge may be in indirect electrical contact with the spar caps via the pre-preg fibrous material in the recesses.

In preferred examples, the method may comprise arranging a stack of layers of pre-preg fibrous material in the recesses of the first and second blade modules prior to arranging the stack of layers in the bridge recess. In some examples, each layer of pre-preg fibrous material arranged in the recesses, i.e. on the scarfed surfaces defined by the tapered end portions of the spar caps, may comprise a layer of woven fibres, a layer of unidirectional fibres, a layer of biaxial fibres, a layer of multiaxial fibres, or a layer of fibres in the form of a chopped strand mat. In some examples, the pre-preg fibrous material may comprise a plurality of layers of different pre-preg fibrous material, that is to say, in some examples the layers of pre-preg fibrous material may comprise different fibrous material. A plurality of layers of pre-preg fibrous material may conform more closely to the contours of the interfacing surfaces, i.e. the scarfed surfaces, of the spar caps and the spar bridge, thereby providing an improved cushioning effect.

The pre-preg fibrous material comprises fibrous material pre-impregnated with resin. The fibrous material may be pre-impregnated with a toughened resin, for example SE75 from Gurit.. The use of toughened resin (compared to a non-toughened resin) may improve the joint strength of the pre-preg fibrous material to the spar caps and the pre-cured layers of the spar bridge, thereby providing a stronger joint between the spar caps and the spar bridge.

In some examples, the method may comprise arranging a plurality of side-by-side stacks of layers in the bridge recess to form the spar bridge. For example, the method may comprise arranging two or three side-by-side stacks of layers in the bridge recess to form the spar bridge. Forming the spar bridge of a plurality of side by side stacks of layers may increase the flexibility of the spar bridge and may therefore allow the spar bridge, i.e. the pre-cured layers and pre-preg interlayers, to better conform to the recesses of the first and second blade modules.

In some examples, arranging the first and second blade modules end-to-end may comprise spacing the first and second blade modules apart in the longitudinal direction. With the first and second blade modules spaced apart in the longitudinal direction, the length of the spar bridge may be increased. A longer spar bridge may comprise longer pre-cured layers that are more flexible and therefore more compliant to twisting and bending when arranged in the recesses of the first and second blade modules. As such, spacing the blade modules apart in the longitudinal direction may facilitate greater tolerance of misalignments or geometrical deviations between the recesses of the first and second blade module.

In examples where the first and second blade modules are spaced apart in the longitudinal direction, the method may further comprise providing an open-ended U-shaped channel and aligning the U-shaped channel with the recesses of the first and second blade modules. In such an example, the bridge recess may therefore be defined by the recesses of the first and second blade modules and the U-shaped channel. Accordingly, the U-shaped channel preferably spans the interface between the first and second blade modules, and arranging the stack of layers in the bridge recess preferably comprises arranging the stack of layers in the U-shaped channel.

The U-shaped channel may be configured to reinforce the connection between the first and second blade modules, and in some examples the U-shaped channel may provide additional load paths for transferring loads between the blade modules in use. For example, the U-shaped channel may be formed of a composite material, such as fibre-reinforced polymer. The U-shaped channel may comprise one or more plies of multi-axial fibrous reinforcing material, such as biaxial or triaxial fibrous reinforcing material. The U-shaped channel may comprise one or more layers of fibrous reinforcing material comprising unidirectional reinforcing fibres. The unidirectional reinforcing fibres preferably extend in the longitudinal direction. The U-shaped channel may comprise glass fibre reinforced plastic (GFRP). The U-shaped channel may comprise carbon reinforcing fibres.

In some examples, the method may further comprise sealing the U-shaped channel to the first and second blade modules, i.e. to the spar caps and/or outer shells of the first and second blade modules. The method may further comprise sealing the vacuum film to the U-shaped channel such that the sealed region is defined between the vacuum film, the recesses of the first and second blade modules, and the U-shaped channel. Such a configuration may advantageously facilitate consolidating the stack of layers under vacuum pressure in the bridge recess in examples where the first and second blade modules are spaced apparat in the longitudinal direction.

In some examples, the stack of layers may be pre-assembled prior to being arranged in the bridge recess. Pre-assembling the stack of layers "offline" i.e. separate from the first and second blade modules, may facilitate a faster on-site assembly of the modular wind turbine blade. For example, when assembling the modular wind turbine blade, the pre-assembled stack may be arranged in the bridge recess in a single assembly step. Pre-assembling the stack of layers may also enable greater control and accuracy in the assembly of the stack without onsite assembly constraints.

Pre-assembling the stack of layers may comprise providing a plurality of pre-cured layers and at least one pre-preg interlayer, and assembling the pre-cured layers and the pre-preg interlayers in a stack in which the pre-cured layers are interleaved with the pre-preg interlayers. In such an example the method may further comprise heating the stack to a temperature to increase the tackiness of the resin in the pre-preg interlayers and thereby temporarily bind the pre-cured layers together in the stack.

The tackiness of the pre-preg interlayers refers to the intrinsic stickiness of the pre-preg interlayers and may be thought of as a measure of the mechanical force required to separate an interlayer from an adjacent pre-cured layer and vice versa. Heating the stack to a low temperature may reduce the viscosity of the resin in the pre-preg interlayers causing at least some of the resin to mobilise between the pre-cured layers. As such, heating the stack may increase wetting of the pre-cured layers adjacent to a respective pre-preg interlayer. This in turn may increase the adhesion of the interlayers to the pre-cured layers to temporarily bind the layers together in the stack.

In such examples, the pre-assembled stack is preferably heated to a low temperature, such as 20°C to 30°C such that at least some of the resin in the pre-preg interlayers mobilises between the pre-cured layers. Notably, heating the stack of layers to a low temperature preferably causes some of the resin to mobilise between the pre-cured layers, but does not cause polymer chains in the resin in the pre-preg interlayer to cross-link, such that the resin remains in an un-cured, tacky state. Heating the stack of layers when pre-assembling the stack therefore comprises heating the stack to a lower temperature than the curing temperature of the resin in the pre-preg interlayers.

In preferred examples, the pre-preg interlayers may be pre-cooled prior to arrangement between pre-cured layers in the stack. For example, when pre-assembling the stack of layers, the pre-preg interlayers may be provided as pre-cooled pre-preg interlayers. As such, the pre-preg interlayers in the stack may initially have a temperature lower than the pre-cured layers. Pre-cooling the pre-preg interlayers helps to ensure that the resin in the pre-preg interlayers has a high viscosity and therefore does not move or flow relative to the fibrous material in the pre-preg interlayer before arrangement in the stack. Pre-cooling the pre-preg interlayers reduces the tackiness of the pre-preg interlayers, thereby improving handling of the interlayers. Applying heat to the stack of layers when pre-assembling the stack may comprise heating the pre-cooled pre-preg interlayers from a sub-ambient temperature to ambient temperature. For example, the pre-preg interlayers may be pre-cooled to a temperature between -10°C and 10°C, and applying heat to the stack of layer may involve heating the stack to an ambient temperature, such as between 20°C and 30°C.

In some other examples, pre-assembling the stack of layers may comprise assembling pre-cured layers interleaved with pre-preg interlayers in a stack, and securing adjacent pre-cured layers together by providing adhesive between said adjacent pre-cured layers and curing the adhesive. The adhesive provided between the adjacent pre-cured layers is preferably ambient-curing adhesive and/or adhesive with a lower cure temperature than the resin in the pre-preg interlayers and/or adhesive with a shorter cure time than the resin in the pre-preg interlayers. As such, the adhesive provided between the pre-cured layers is preferably cured to secure the adjacent pre-cured layers together, whilst the resin in the pre-preg interlayers remains uncured until after the pre-assembled stack is arranged in the bridge recess.

In examples where adhesive is provided between adjacent pre-cured layers when pre-assembling the stack, such adhesive is preferably provided in a central region of the stack. The adhesive therefore preferably secures central portions of adjacent pre-cured layers together. In preferred example, the ends of adjacent pre-cured layers are not secured together with adhesive, and may be restrained simply by the tackiness of the pre-preg interlayers. As such, the ends of the pre-cured layers may move relative to one another, affording the stack a degree of flexibility such that the ends of the stack may still conform to the recess of the first and second blade modules when arranged in the bridge recess.

In some other examples, pre-assembling the stack of layers may comprise assembling pre-cured layers interleaved with pre-preg interlayers in a stack, and strapping the layers in the stack together. For example, one or more strips of a fibrous material, such as pre-preg fibrous material, may be used to strap the layers together.

In some examples, pre-assembling the stack of layers may comprise arranging a vacuum film over the stacked layers to form a sealed region. The sealed region may be evacuated under vacuum pressure to consolidate the layers in the stack. The vacuum pressure may compress the stack of layers in the sealed region. Compressing uncured pre-preg interlayers between pre-cured layers may cause the interlayers to temporarily tack the pre-cured layers together. In some examples the stack of layers in the sealed volume may be heated whilst the stack is consolidated under vacuum pressure. As described previously, heating the stack of layers may increase the tackiness of the resin in the pre-preg interlayers to temporarily bind the pre-cured layers together in the stack.

### Brief description of the drawings

Examples of the present invention will now be described by way of non-limiting example only, with reference to the accompanying figures, in which:
Figure 1 is a schematic exploded view of a modular wind turbine blade having first and second blade modules connected together at an interface via a spar bridge;
Figure 2 is a schematic cross-sectional view of the spar bridge connecting spar caps of the first and second blade modules;
Figure 3 is a schematic cross-sectional view of the spar bridge connecting spar caps of the first and second blade modules in an example where the blade comprises pre-preg fibrous material arranged between the spar caps and the spar bridge;
Figure 4 is a schematic view of a stage in a method of pre-assembling a stack of layers that form the spar bridge; and
Figure 5 is a schematic view of a stage in another method of pre-assembling a stack of layers that form the spar bridge.

### Detailed description

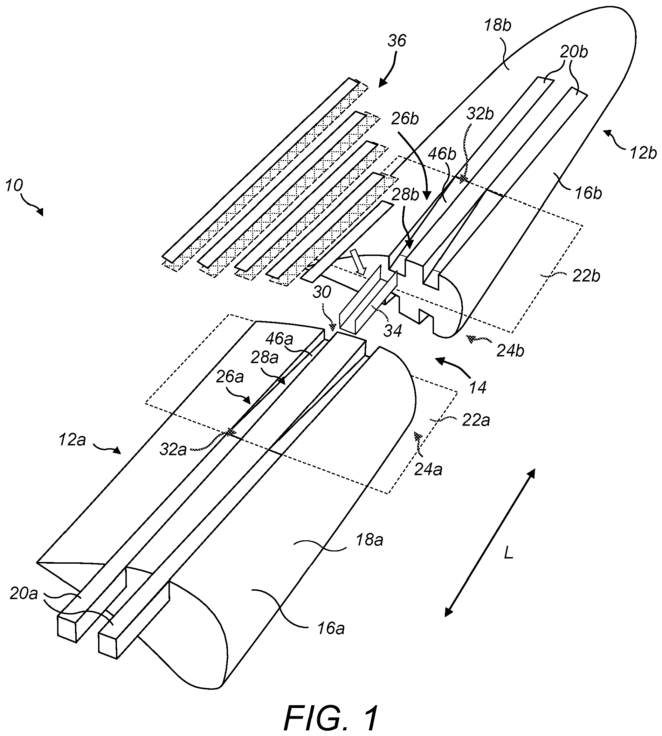

As described above by way of background, assembling a wind turbine blade from a plurality of blade modules may facilitate the provision of larger wind turbine blades whilst still enabling transport of large blade parts to the wind turbine site. The schematic exploded view of Figure 1 shows an example of a modular wind turbine blade 10 comprising a first blade module 12a and a second blade module 12b that are connectable together at an interface 14 to form at least part of the modular wind turbine blade 10.

The first and second blade modules 12a, 12b each comprise an outer shell 16a, 16b defining an outer surface 18a, 18b of the blade module 12a, 12b. The blade modules 12a, 12b each comprise a longitudinally-extending spar cap 20a, 20b embedded in their respective outer shell 16a, 16b. The spar caps 20a, 20b may be part of a reinforcing spar structure that provides structural support to the outer shells 16a, 16b of each blade module 12a, 12b. For ease of reference, the spar cap 20a of the first blade module 12a may be referred to as a first spar cap, and the spar cap 20b of the second blade module 12b may be referred to as a second spar cap.

The outer shell 16a, 16b of each blade module 12a, 12b comprises a connecting region 22a, 22b which defines an interface end 24a, 24b of the blade module. In the connecting region 22a of the first blade module 12a, the first spar cap 20a has a tapered end portion 26a in which the thickness of the spar cap 20a decreases towards the interface end 24a of the first blade module 12a. Accordingly, the tapered end portion 26a of the first spar cap 20a defines a tapered recess 28a in the outer surface 18a of the first blade module. For ease of reference, the tapered recess 28a of the first blade module 12a is referred to herein as a first tapered recess.

Further, the second spar cap 20b has a tapered end portion 26b in the connecting region 22b of the second blade module 12b. The thickness of the second spar cap 20b decreases towards the interface end 24b of the second blade module 12b, and the tapered end portion 26b of the second spar cap 20b defines a tapered recess 28b in the outer surface 18b of the second blade module 12b. For ease of reference, the tapered recess 28b of the second blade module 12b is referred to herein as a second tapered recess.

Referring still to Figure 1, to assemble the modular wind turbine blade 10, the first and second blade modules 12a, 12b are arranged end-to-end with the tapered recesses 28a, 28b aligned. As such, the aligned first and second tapered recesses 28a, 28b define a bridge recess 30 spanning the interface 14 between the blade modules. The first tapered recess 28a defines a first end 32a of the bridge recess 30, and the second tapered recess 28b defines a second end 32b of the bridge recess 30.

As shown in Figure 1, in some examples the first and second blade modules 12a, 12b may be spaced apart in the longitudinal direction L when arranged with their respective tapered recesses 28a, 28b aligned. In such an example, a U-shaped channel 34 may be arranged to align with the first and second recesses 28a, 28b. Accordingly, the bridge recess may be defined by the recesses 28a, 28b of the first and second blade modules 12a, 12b and the U-shaped channel 34.

In order to connect the first and second blade modules 12a, 12b, and more particularly to connect the spar caps 20a, 20b of the first and second blade modules 12a, 12b, a stack of layers 36 is arranged in the bridge recess 30, spanning the interface 14 between the blade modules 12a, 12b. As will be described later in more detail, the stack of layers 36 in the bridge recess 30 forms a spar bridge connecting the spar caps 20a, 20b of the first and second blade modules 12a, 12b. The blade modules 12a, 12b shown in Figure 1 each comprise two spar caps 20a, 20b respectively, and it will be appreciated that each spar cap 20a is connected to an opposing spar cap 20b in accordance with the description provided herein. However, for clarity in Figure 1 only a first stack of layers 36 for connecting a first pair of spar caps 20a, 20b is shown.

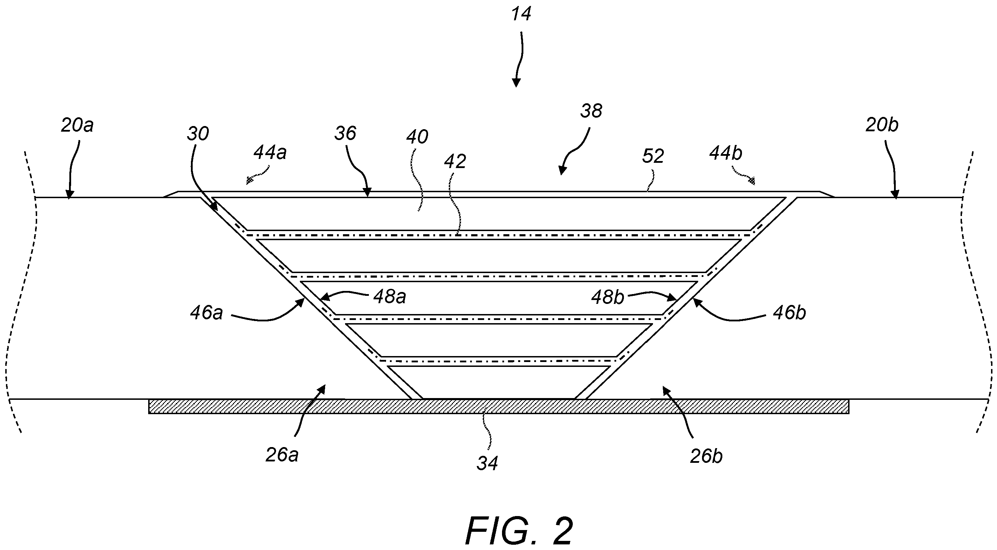

Referring additionally to Figure 2, which shows a cross-sectional view of a spar bridge 38 in the bridge recess 30, the stack of layers 36 comprises a plurality of pre-cured layers 40 interleaved with pre-preg interlayers 42. The pre-cured layers 40 are cured prior to arrangement in the stack 36, for example the pre-cured layers 40 may comprise pultrusions. The pre-preg interlayers 42 comprise fibrous material that is pre-impregnated with uncured resin, i.e. the fibrous material is pre-impregnated with resin prior to arrangement in the stack 36. As such, resin is provided between the pre-cured layers 40 by arranging the pre-preg interlayers 42 between the pre-cured layers 40 in the stack 36. In preferred examples, the pre-preg interlayers 42 comprise excess resin, for example at 50% resin by weight.

In some examples, successively longer pre-cured layers 40 may be arranged in the bridge recess 30. As shown in Figure 2, in such an example the successively longer pre-cured layers 40 may form a spar bridge 38 that has a first end 44a and a second end 44b which each taper in thickness. The tapering ends 44a, 44b of the spar bridge 38 advantageously transfer loads gradually between the spar bridge 38 and the first and second spar caps 20a, 20b in use. The tapered end portions 26a, 26b of the spar caps 20a, 20b may each define a scarfed surface 46a, 46b, and the tapered ends 44a, 44b of the spar bridge 38 may also defined scarfed surfaces 48a, 48b. Accordingly, the spar bridge 38 may be connected to each spar cap 20a, 20b via scarf joints formed between the scarfed surfaces 46a, 48a and 46b, 48b.

In some examples, the stack of layers 36 may be arranged such that the first end 44a of the spar bridge 38 tapers at substantially the same rate as the tapered end portion 26a of the first spar cap 20a. Further, the second end 44b of the spar bridge 38 preferably tapers at substantially the same rate as the tapered end portion 26b of the second spar cap 20b. This helps to reduce variations in the thickness of a bond gap defined between the tapered end portion 26 of each spar cap 20 and the spar bridge 38, i.e. between the scarfed surfaces 46, 48 of the spar caps 20 and the spar bridge 38.

Following arrangement of the stack of layers 36 in the bridge recess 30, in some examples the layers 40, 42 may be consolidated to conform to the profiles of the recesses 28a, 28b of the first and second blade modules 12a, 12b (shown most clearly in Figure 1). For example, a vacuum film 52 may be arranged over the stack 36 to define a sealed region containing the stack 36, and the sealed region may then be evacuated under vacuum pressure. In examples where the bridge recess 30 is additionally defined by a U-shaped channel 34, the U-shaped channel 34 may also define part of the sealed region when the vacuum film 52 is arranged over the stack 36. Evacuating the sealed region under vacuum pressure compresses the stack of layers 36 in the bridge recess 30 to conform the profiles of the recesses 28a, 28b which define the bridge recess 30. Consolidating the stack of layers 30 therefore also helps to reduce variations in the bond gap thickness between the scarfed surfaces 46, 48 of the spar caps 20 and the spar bridge 38.

Heat may be applied to the stack of layers 36 after arranging the stack 36 in the bridge recess 30. Applying heat to the stack 36 means that the resin in the pre-preg interlayers 42 is heated which advantageously reduces the viscosity of the resin, causing the resin to mobilise in the bridge recess 30, i.e. to permeate throughout the bridge recess 30. Applying heat to the stack 36 preferably comprises heating the stack of layers 36 to at least 60°C.

This helps to ensure that the viscosity of the resin decreases initially to permeate throughout the bridge recess 30. Further, heating to at least 60°C may accelerate the crosslinking of polymer chains in the resin, thereby reducing the time required to cure the resin.

After mobilising in the bridge recess 30, the resin from the pre-preg interlayers 42 is cured to integrate the pre-cured layers 40 with each other. Curing the resin to integrate the pre-cured layers 40 forms the spar bridge 38 spanning the interface 14 between the first and second blade modules 12a, 12b, as shown by way of example in Figure 2. The spar bridge 38 serves to connect the spar caps 20a, 20b of the first and second blade modules 12a, 12b to transfer loads between the spar caps in use.

In some examples, the spar bridge 38 may also serve to electrically connect the first and second spar caps 20a, 20b. For example, the spar caps 20a, 20b of the first and second blade modules 12a, 12b may comprise an electrically conductive material, such as carbon fibre. As such, in the event of lightning striking the modular wind turbine blade 10 in use, the spar caps 20a, 20b may conduct electricity from the lightning strike. Advantageously, the spar bridge 38 may be configured to safely conduct electricity between the first and second spar caps 20a, 20b and avoid flashovers, i.e. electrical arcs, between the electrically conductive spar caps.

For example, the pre-preg interlayers 42 may comprise an electrically conductive material (such as carbon fibre), and the pre-preg interlayers 42 may be arranged in the stack 36 in electrical contact with at least one of the spar caps 20a, 20b. Electrical contact refers to both direct contact between two conductive components, e.g. the spar caps 20 and the pre-preg interlayers 42, and to indirect electrical contact between two electrically conductive components via one or more other electrically conductive components arranged therebetween.

As shown in Figure 2, at least some of the pre-preg interlayers 42 preferably extend longitudinally beyond the ends of their adjacent pre-cured layers 40. Such an arrangement may facilitate the above-described electrical contact between the pre-preg interlayers 42 and the spar caps 20a, 20b. Further, such a configuration helps to ensure that sufficient resin is provided between the ends of the pre-cured layers 40 to thoroughly bond adjacent pre-cured layers 40 together.

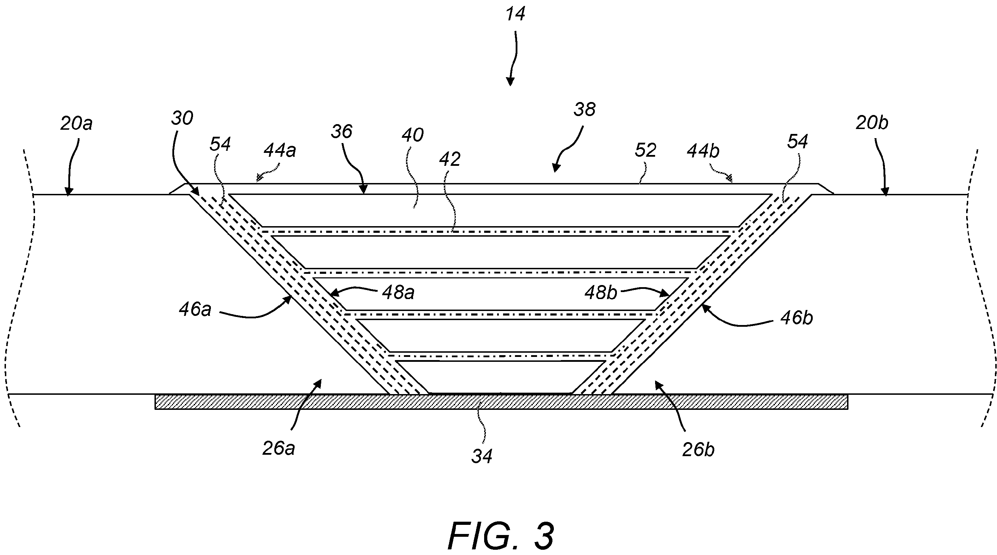

Figure 3 shows a schematic cross-sectional view of the spar bridge 38 in another example of the modular wind turbine blade 10. As shown for example in Figure 3, assembling the modular blade 10 may, in some examples, further include arranging pre-preg fibrous material 54 in the recesses 28a, 28b of the first and second blade modules 12a, 12b before the stack of layers 36 is arranged in the bridge recess 30. The pre-preg fibrous material 54 may provide a cushioning effect between the ends 44a, 44b of the spar bridge 38 and the tapered end portions 26a, 26b of the spar caps 20a, 20b. As such, the pre-preg fibrous material 54 arranged in the recesses 28a, 28b and located between the scarfed surfaces 46, 48 of the spar caps 20a, 20b and the spar bridge 38 may help to alleviate inconsistencies or variations in the bond gap thickness. For example, the pre-preg fibrous material 54 may be configured to conform to the profiles of the recesses 28a, 28b and the spar bridge 38 to absorb variations in the scarfed surfaces 46, 48 and fill any gaps or voids between the spar caps 20a, 20b and the spar bridge 38.

In preferred examples, the pre-preg fibrous material 54 arranged in the recesses 28a, 28b may be electrically conductive. In such an example, the pre-preg interlayers 42 may be arranged in indirect electrical contact with the first and second spar caps 20a, 20b via the pre-preg fibrous material 54 in the recesses 28a, 28b. Accordingly, the pre-preg interlayers 42 are preferably arranged in the stack 36 so as to contact the pre-preg material 54 in the recesses 28a, 28b in such an example.

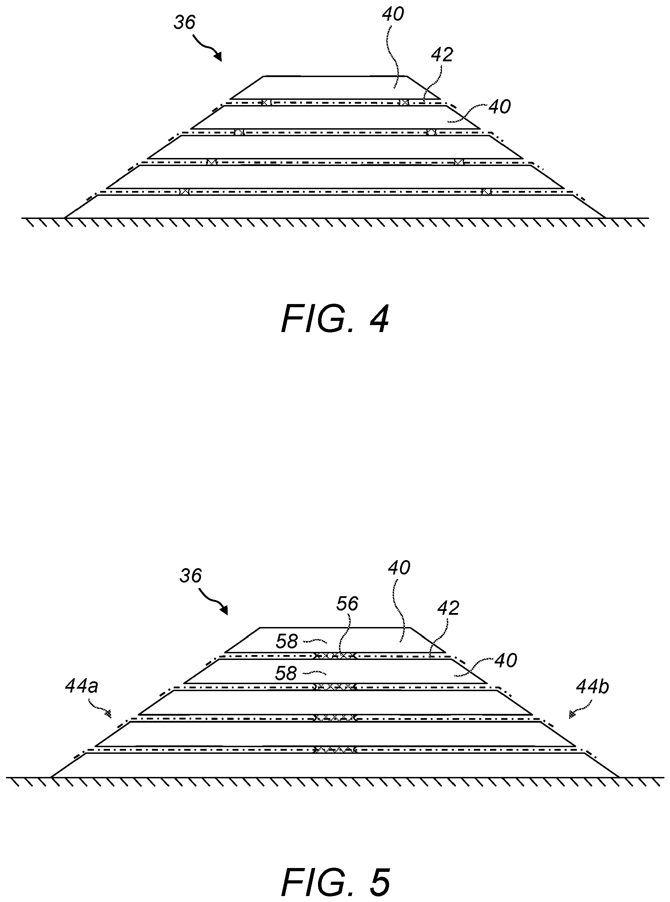

As shown in Figures 4 and 5, in some examples the stack of layers 36 may be pre-assembled before the stack 36 is arranged in the bridge recess 30. Pre-assembling the stack of layers 36, i.e. arranging the stack of layers "offline", may facilitate faster on-site assembly of the modular wind turbine blade 10 because a plurality of layers in the stack 36 can then be arranged in the bridge recess 30 in a single process step. Pre-assembling the stack of layers 36 involves securing adjacent pre-cured layers 40 together in the stack 36. An "adjacent pre-cured layer 40" is the closest-lying pre-cured layer 40 to another pre-cured layer 40. As such, it will be appreciated that two pre-cured layers 40 interleaved with a pre-preg interlayer 42 between the two pre-cured layers 40 may be referred to herein as "adjacent pre-cured layers 40".

Referring initially to Figure 4, the layers 40 in the stack 36 may be tacked together temporarily by the resin in the pre-preg interlayers 42. For example, the pre-cured layers 40 and the pre-preg interlayers 42 may be assembled in a stack 36 in which the pre-cured layers 40 are interleaved with the pre-preg interlayers 42. Following this, the stack 36 may be heated to increase the tackiness of the resin in the pre-preg interlayers 42. The pre-preg interlayers 42 are arranged between pre-cured layers 40, and increasing the tackiness, or adhesion, of the resin therefore serves to temporarily bind the pre-cured layers 40 together in the stack 36.

In some examples, as shown in Figure 4, heating the stack 36 may involve localised heating. As such, a localized region of resin in a pre-preg interlayer 42 may mobilise between the adjacent pre-cured layers 40 to temporarily tack the pre-cured layers 40 together at specific locations.

Figure 5 shows another example of a method for pre-assembling the stack of layers 36. As shown, in some examples adjacent pre-cured layers 40 in the stack 36 may be secured together by providing adhesive 56 between the adjacent pre-cured layers 40 and subsequently curing the adhesive 56. If the pre-preg interlayers 42 extend along the entire length of the stack 36, the pre-preg interlayers 42 are preferably configured to allow the adhesive 56 provided between the pre-cured layers 40 to permeate through the pre-preg interlayers 42. In other examples, the pre-preg interlayers 42 may be interrupted in locations where adhesive 56 is provided.

A preferred example is shown in Figure 5, where the adhesive 56 is provided in a central region of the stack 36 to secure central portions 58 of adjacent pre-cured layers 40 together. Securing the central portions 58 of the pre-cured layers 40 together advantageously secures the pre-cured layers 40 together whilst maintaining the flexibility of the stack 36 at the first and second ends 44a, 44b. As such, the first and second ends 44a, 44b are still able to conform to the profiles of the recesses 28a, 28b in the first and second blade modules 12a, 12b when the stack 36 is arranged in the bridge recess 30 during assembly of the blade 10.

Whilst not shown in Figure 4 or Figure 5, both of the pre-assembly methods described may additionally involve arranging a vacuum film over the pre-assembled stack 36 and evacuating a sealed region defined by the vacuum film to consolidate the pre-assembled stack 36. The vacuum pressure may help to compress the layers 40, 42 together. In particular this may compress the pre-preg interlayers 42 between adjacent pre-cured layers 40 which may increase the adhesion of the pre-preg layers 42 to their adjacent pre-cured layers 40.

In some examples the method of assembling the modular wind turbine blade 10 may involve arranging a plurality of stacks 36 side-by-side in the bridge recess 30. For example, each of the stacks 36 may be pre-assembled as described previously with reference to Figures 4 and 5. In some examples, the stacks 36 may be arranged side-by-side and consolidated into a single pre-assembled part, thereby reducing the process-steps required on-site to arrange the stacks 36 in the bridge recess 30.

It will be appreciated that the description provided above serves to demonstrate a plurality of possible examples of the present invention. Features described in relation to any of the examples above may be readily combined with any other features described with reference to different examples without departing from the scope of the invention as defined in the appended claims.

## Claims

1. A method of assembling a modular wind turbine blade (10) comprising first and second blade modules (12a, 12b) connectable together at an interface (14) to form at least part of the modular wind turbine blade, the method comprising:
providing a first blade module (12a) and a second blade module (12b), each blade module comprising an outer shell (16a, 16b) defining an outer surface (18a, 18b) of the blade module, a connecting region (22a, 22b) of the outer shell defining an interface end (24a, 24b) of the blade module, and a longitudinally-extending spar cap (20a, 20b) embedded in the outer shell, the spar cap having a tapered end portion (26a, 26b) in the connecting region in which the thickness of the spar cap decreases towards the interface end of the blade module such that a tapered recess (28a, 28b) is defined in the outer surface of the blade module;
arranging the first and second blade modules (12a, 12b) end-to-end with the tapered recesses (28a, 28b) aligned to define a bridge recess (30), the tapered recess of the first blade module defining a first end (32a) of the bridge recess, and the tapered recess of the second blade module defining a second end (32b) of the bridge recess;
arranging a stack of layers (36) in the bridge recess (30) and spanning the interface (14) between the first and second blade modules (12a, 12b), the stack of layers comprising a plurality of pre-cured layers (40) interleaved with pre-preg interlayers (42), wherein the pre-preg interlayers comprise fibrous material that is pre-impregnated with uncured resin;
applying heat to the stack of layers (36) in the bridge recess (30) such that the resin in the pre-preg interlayers mobilises in the bridge recess; and
curing the resin to integrate the pre-cured layers (40) with each other to form a spar bridge (38) spanning the interface (14), the spar bridge serving to connect the spar caps (20a, 20b) of the first and second blade modules (12a, 12b).

2. The method of Claim 1, wherein applying heat to the stack of layers (36) in the bridge recess (30) comprises heating the stack of layers to at least 60°C, preferably at least 70°C, more preferably at least 80°C.

3. The method of Claim 1 or Claim 2, wherein prior to curing the resin, the method further comprises arranging a vacuum film (52) over the stack of layers (36) in the bridge recess to define a sealed region containing the stack; and
evacuating the sealed region under vacuum pressure to consolidate the stack of layers in the bridge recess such that the stack conforms to the profiles of the recesses (28a, 28b) of the first and second blade modules (12a, 12b).

4. The method of any preceding claim, wherein arranging the stack of layers (36) comprises arranging successively longer pre-cured layers in the bridge recess (30) to form a spar bridge (38) having a first end (44a) that tapers in thickness and a second end (44b) that tapers in thickness.

5. The method of any preceding claim, wherein at least some of the pre-preg interlayers (42) extend longitudinally beyond the ends of their adjacent pre-cured layers (40).

6. The method of any preceding claim, wherein the spar caps (20a, 20b) of the first and second blade modules comprise an electrically conductive material, wherein the pre-preg interlayers (42) comprise an electrically conductive material, and wherein the stack of layers (36) is arranged in the bridge recess with the pre-preg interlayers in electrical contact with at least one of the spar caps.

7. The method of any preceding claim, wherein at least some of the pre-preg interlayers (42) have a greater width than their adjacent pre-cured layers (40).

8. The method of any preceding claim, wherein the pre-preg interlayers (42) comprise a fibre volume fraction (FVF) from 30% to 70%, preferably from 45% to 55%, such as 50%.

9. The method of any preceding claim, further comprising arranging pre-preg fibrous material (54), preferably a stack of layers of pre-preg fibrous material, in the recesses (28a, 28b) of the first and second blade modules prior to arranging the stack of layers in the bridge recess.

10. The method of any preceding claim, further comprising arranging a plurality of side-by-side stacks of layers (36) in the bridge recess (30) to form the spar bridge.

11. The method of any preceding claim, wherein arranging the first and second blade modules (12a, 12b) end-to-end comprises spacing the first and second blade modules apart in the longitudinal direction, and wherein the method further comprises:
providing an open-ended U-shaped channel (34) and aligning the U-shaped channel with the recesses (28a, 28b) of the first and second blade modules such that the bridge recess (30) is defined by the recesses of the first and second blade modules and the U-shaped channel.

12. The method of any preceding claim, wherein the stack of layers (36) is pre-assembled prior to being arranged in the bridge recess.

13. The method of Claim 12, wherein pre-assembling the stack of layers (36) comprises:
Providing a plurality of pre-cured layers (40) and at least one pre-preg interlayer (42);
assembling the pre-cured layers and the pre-preg interlayers in a stack in which the pre-cured layers are interleaved with the pre-preg interlayers; and
heating the stack to a temperature to increase the tackiness of the resin in the pre-preg interlayers and thereby temporarily bind the pre-cured layers together in the stack.

14. The method of Claim 12, wherein pre-assembling the stack of layers (36) comprises:
assembling pre-cured layers (40) interleaved with pre-preg interlayers (42) in a stack; and
securing adjacent pre-cured layers together by providing adhesive (56) between said adjacent pre-cured layers and curing the adhesive.

15. The method of Claim 14 wherein the adhesive (56) is provided in a central region of the stack (36) to secure central portions of adjacent pre-cured layers together (40).

## Patentansprüche

1. Verfahren zum Montieren eines modularen Windkraftanlagenblatts (10), umfassend ein erstes und zweites Blattmodul (12a, 12b), die an einer Schnittstelle (14) miteinander verbunden werden können, um zumindest einen Teil des modularen Windkraftanlagenblatts zu bilden, wobei das Verfahren Folgendes umfasst:
Bereitstellen eines ersten Blattmoduls (12a) und eines zweiten Blattmoduls (12b), wobei jedes Blattmodul eine Außenschale (16a, 16b) umfasst, die eine Außenfläche (18a, 18b) des Blattmoduls definiert, einen Verbindungsbereich (22a, 22b) der Außenschale, der ein Schnittstellenende (24a, 24b) des Blattmoduls definiert, und einen sich in Längsrichtung erstreckenden Gurt (20a, 20b), der in die Außenschale eingebettet ist, wobei der Gurt im Verbindungsbereich einen sich verjüngenden Endabschnitt (26a, 26b) aufweist, in dem die Dicke des Gurts zum Schnittstellenende des Blattmoduls hin abnimmt, sodass eine sich verjüngende Aussparung (28a, 28b) in der Außenfläche des Blattmoduls ausgebildet ist;
Anordnen des ersten und zweiten Blattmoduls (12a, 12b) Ende an Ende so, dass die konischen Aussparungen (28a, 28b) so ausgerichtet sind, dass sie eine Brückenaussparung (30) bilden, wobei die konische Aussparung des ersten Blattmoduls ein erstes Ende (32a) der Brückenaussparung definiert, und die konische Aussparung des zweiten Blattmoduls ein zweites Ende (32b) der Brückenaussparung definiert;
Anordnen eines Stapels von Schichten (36) in der Brückenaussparung (30) und Überbrücken der Schnittstelle (14) zwischen dem ersten und zweiten Blattmodul (12a, 12b), wobei der Schichtstapel eine Vielzahl von vorgehärteten Schichten (40) umfasst, die mit vorimprägnierten Zwischenschichten (42) abwechselnd angeordnet sind, wobei die vorimprägnierten Zwischenschichten Fasermaterial umfassen, das mit ungehärtetem Harz vorimprägniert ist;
Erhitzen des Schichtstapels (36) in der Brückenaussparung (30) so, dass sich das Harz in den vorimprägnierten Zwischenschichten in der Brückenaussparung mobilisiert; und
Aushärten des Harzes, um die vorgehärteten Schichten (40) miteinander zu verbinden und eine Holmbrücke (38) zu bilden, die die Schnittstelle (14) überspannt, wobei die Holmbrücke dazu dient, die Gurten (20a, 20b) des ersten und zweiten Blattmoduls (12a, 12b) zu verbinden.

2. Verfahren nach Anspruch 1, wobei Erhitzen des Schichtstapels (36) in der Brückenaussparung (30) Erhitzen des Schichtstapels auf mindestens 60 °C, vorzugsweise mindestens 70 °C, bevorzugter mindestens 80 °C umfasst.

3. Verfahren nach Anspruch 1 oder 2, wobei vor dem Aushärten des Harzes das Verfahren ferner das Anordnen einer Vakuumfolie (52) über dem Schichtstapel (36) in der Brückenaussparung zum Definieren eines abgedichteten Bereichs umfasst, der den Stapel enthält; und
Evakuieren des abgedichteten Bereichs unter Vakuumdruck, um den Schichtstapel in der Brückenaussparung so zu verfestigen, dass der Stapel sich den Profilen der Aussparungen (28a, 28b) des ersten und zweiten Blattmoduls (12a, 12b) anpasst.

4. Verfahren nach einem vorstehenden Anspruch, wobei Anordnen des Schichtstapels (36) Anordnen sukzessiver längerer vorgehärteter Schichten in der Brückenaussparung (30) umfasst, um eine Holmbrücke (38) mit einem ersten Ende (44a), das sich in der Dicke verjüngt, und einem zweiten Ende (44b), das sich ebenfalls in der Dicke verjüngt, zu bilden.

5. Verfahren nach einem vorstehenden Anspruch, wobei sich mindestens einige der vorimprägnierten Zwischenschichten (42) in Längsrichtung über die Enden ihrer angrenzenden vorgehärteten Schichten (40) hinaus erstrecken.

6. Verfahren nach einem vorstehenden Anspruch, wobei die Gurten (20a, 20b) des ersten und zweiten Blattmoduls ein elektrisch leitfähiges Material umfassen, wobei die vorimprägnierten Zwischenschichten (42) ein elektrisch leitfähiges Material umfassen und wobei der Schichtstapel (36) in der Brückenaussparung so angeordnet ist, dass die vorimprägnierten Zwischenschichten in elektrischem Kontakt mit mindestens einer der Gurten stehen.

7. Verfahren nach einem vorstehenden Anspruch, wobei mindestens einige der vorimprägnierten Zwischenschichten (42) eine größere Breite aufweisen als ihre angrenzenden vorgehärteten Schichten (40).

8. Verfahren nach einem vorstehenden Anspruch, wobei die vorimprägnierten Zwischenschichten (42) einen Faservolumenanteil (FVF) von 30 % bis 70 %, vorzugsweise von 45 % bis 55 %, wie zum Beispiel 50 % umfassen.

9. Verfahren nach einem vorstehenden Anspruch, ferner umfassend Anordnen von vorimprägniertem Fasermaterial (54), vorzugsweise einem Stapel von Schichten vorimprägnierten Fasermaterials, in den Aussparungen (28a, 28b) des ersten und zweiten Blattmoduls, bevor der Schichtstapel in der Brückenaussparung angeordnet wird.

10. Verfahren nach einem vorstehenden Anspruch, ferner umfassend Anordnen einer Vielzahl von nebeneinanderliegenden Stapeln von Schichten (36) in der Brückenaussparung (30) zur Bildung der Holmbrücke.

11. Verfahren nach einem vorstehenden Anspruch, wobei Anordnen des ersten und zweiten Blattmoduls (12a, 12b) Ende an Ende Beabstanden des ersten und zweiten Blattmoduls in Längsrichtung umfasst, und wobei das Verfahren ferner Folgendes umfasst:
Bereitstellen eines offenen U-förmigen Kanals (34) und Ausrichten des U-förmigen Kanals mit den Aussparungen (28a, 28b) des ersten und zweiten Blattmoduls, so dass die Brückenaussparung (30) durch die Aussparungen des ersten und zweiten Blattmoduls und den U-förmigen Kanal definiert wird.

12. Verfahren nach einem vorstehenden Anspruch, wobei der Schichtstapel (36) vor dem Einsetzen in die Brückenaussparung vormontiert wird.

13. Verfahren nach Anspruch 12, wobei Vormontieren des Schichtstapels (36) Folgendes umfasst:
Bereitstellen einer Vielzahl vorgehärteter Schichten (40) und mindestens einer vorimprägnierten Zwischenschicht (42);
Zusammenfügen der vorgehärteten Schichten und der vorimprägnierten Zwischenschichten zu einem Stapel, in dem die vorgehärteten Schichten mit den vorimprägnierten Zwischenschichten abwechselnd angeordnet sind; und
Erhitzen des Stapels auf eine Temperatur, um die Klebrigkeit des Harzes in den vorimprägnierten Zwischenschichten zu erhöhen und dadurch die vorgehärteten Schichten im Schichtstapel vorübergehend miteinander zu verbinden.

14. Verfahren nach Anspruch 12, wobei Vormontieren des Schichtstapels (36) Folgendes umfasst:
Zusammenfügen von vorgehärteten Schichten (40) in einem Stapel, die mit vorimprägnierten Zwischenschichten (42) abwechselnd angeordnet sind; und
Befestigen der benachbarten vorgehärteten Schichten durch Aufbringen eines Klebstoffs (56) zwischen die benachbarten vorgehärteten Schichten und Aushärten des Klebstoffs.

15. Verfahren nach Anspruch 14, wobei der Klebstoff (56) in einem zentralen Bereich des Stapels (36) vorgesehen ist, um zentrale Abschnitte benachbarter vorgehärteter Schichten (40) miteinander zu befestigen.

## Revendications

1. Procédé d'assemblage d'une pale d'éolienne modulaire (10) comprenant des premier et second module de pale (12a, 12b) pouvant être reliés entre eux au niveau d'une interface (14) pour former au moins une partie de la pale d'éolienne modulaire, le procédé comprenant :
la fourniture d'un premier module de pale (12a) et d'un second module de pale (12b), chaque module de pale comprenant une paroi extérieure (16a, 16b) définissant une surface extérieure (18a, 18b) du module de pale, une région de liaison (22a, 22b) de la paroi extérieure définissant une extrémité d'interface (24a, 24b) du module de pale, et un raidisseur de longeron s'étendant longitudinalement (20a, 20b) intégré dans la paroi extérieure, le raidisseur de longeron présentant une partie d'extrémité conique (26a, 26b) dans la région de liaison dans laquelle l'épaisseur du raidisseur de longeron diminue vers l'extrémité d'interface du module de pale de sorte qu'un évidement conique (28a, 28b) soit défini dans la surface extérieure du module de pale ;
l'agencement des premier et second modules de pale (12a, 12b) bout à bout avec les évidements coniques (28a, 28b) alignés pour définir un évidement de pont (30), l'évidement conique du premier module de pale définissant une première extrémité (32a) de l'évidement de pont, et l'évidement conique du second module de pale définissant une seconde extrémité (32b) de l'évidement de pont ;
l'agencement d'une pile de couches (36) dans l'évidement de pont (30) et couvrant l'interface (14) entre les premier et second modules de pale (12a, 12b), la pile de couches comprenant une pluralité de couches pré-durcies (40) intercalées avec des intercouches de préimprégné (42), dans lequel les intercouches de préimprégné comprennent un matériau fibreux préimprégné de résine non durcie ;
l'application de chaleur à la pile de couches (36) dans l'évidement de pont (30) de sorte que la résine dans les intercouches de préimprégné se mobilise dans l'évidement de pont ; et
le durcissement de la résine pour intégrer les couches pré-durcies (40) entre elles afin de former un pont de longeron (38) couvrant l'interface (14), le pont de longeron servant à relier les raidisseurs de longeron (20a, 20b) des premier et second modules de pale (12a, 12b).

2. Procédé selon la revendication 1, dans lequel l'application de chaleur à la pile de couches (36) dans l'évidement de pont (30) comprend le chauffage de la pile de couches à au moins 60 °C, de préférence à au moins 70 °C, plus préférentiellement à au moins 80 °C.

3. Procédé selon la revendication 1 ou la revendication 2, dans lequel, avant le durcissement de la résine, le procédé comprend en outre l'agencement d'un film sous vide (52) sur la pile de couches (36) dans l'évidement de pont afin de définir une région scellée contenant la pile ; et
l'évacuation de la région scellée sous pression de vide pour consolider la pile de couches dans l'évidement de pont de sorte que la pile se conforme aux profils des évidements (28a, 28b) des premier et second modules de pale (12a, 12b).

4. Procédé selon une quelconque revendication précédente, dans lequel l'agencement de la pile de couches (36) comprend l'agencement de couches pré-durcies successivement plus longues dans l'évidement de pont (30) pour former un pont de longeron (38) présentant une première extrémité (44a) dont l'épaisseur diminue et une seconde extrémité (44b) dont l'épaisseur diminue.

5. Procédé selon une quelconque revendication précédente, dans lequel au moins certaines des intercouches de préimprégné (42) s'étendent longitudinalement au-delà des extrémités de leurs couches pré-durcies (40) adjacentes.

6. Procédé selon une quelconque revendication précédente, dans lequel les raidisseurs de longeron (20a, 20b) des premier et second modules de pale comprennent un matériau électriquement conducteur, dans lequel les intercouches de préimprégné (42) comprennent un matériau électriquement conducteur, et dans lequel la pile de couches (36) est agencée dans l'évidement de pont avec les intercouches de préimprégné en contact électrique avec au moins l'un des raidisseurs de longeron.

7. Procédé selon une quelconque revendication précédente, dans lequel au moins certaines des intercouches de préimprégné (42) ont une largeur supérieure à celle de leurs couches pré-durcies (40) adjacentes.

8. Procédé selon une quelconque revendication précédente, dans lequel les intercouches de préimprégné (42) comprennent une fraction volumique de fibres (FVF) de 30 % à 70 %, de préférence de 45 % à 55 %, telle que 50 %.

9. Procédé selon une quelconque revendication précédente, comprenant en outre l'agencement d'un matériau fibreux de préimprégné (54), de préférence une pile de couches de matériau fibreux de préimprégné, dans les évidements (28a, 28b) des premier et second modules de pale avant d'agencer la pile de couches dans l'évidement de pont.

10. Procédé selon une quelconque revendication précédente, comprenant en outre l'agencement d'une pluralité de piles de couches (36) côte à côte dans l'évidement de pont (30) pour former le pont de longeron.

11. Procédé selon une quelconque revendication précédente, dans lequel l'agencement bout à bout des premier et second modules de pales (12a, 12b) comprend l'espacement des premier et second modules de pales dans le sens longitudinal, et dans lequel le procédé comprend en outre :
la fourniture d'un canal en forme de U d'extrémité ouverte (34) et l'alignement du canal en forme de U avec les évidements (28a, 28b) des premier et second modules de pale de sorte que l'évidement de pont (30) soit défini par les évidements des premier et second modules de pale et le canal en forme de U.

12. Procédé selon une quelconque revendication précédente, dans lequel la pile de couches (36) est pré-assemblée avant d'être agencée dans l'évidement de pont.

13. Procédé selon la revendication 12, dans lequel le pré-assemblage de la pile de couches (36) comprend :
la fourniture d'une pluralité de couches pré-durcies (40) et d'au moins une intercouche de préimprégné (42) ;
l'assemblage des couches pré-durcies et des intercouches de préimprégné dans une pile dans laquelle les couches pré-durcies sont intercalées avec les intercouches de préimprégné ; et
le chauffage de la pile à une température permettant d'augmenter l'adhérence de la résine dans les intercouches de préimprégné et ainsi de lier temporairement les couches pré-durcies ensemble dans la pile.

14. Procédé selon la revendication 12, dans lequel le pré-assemblage de la pile de couches (36) comprend :
l'assemblage de couches pré-durcies (40) intercalées avec des intercouches de préimprégné (42) dans une pile ; et
la fixation ensemble de couches pré-durcies adjacentes par la fourniture d'un adhésif (56) entre lesdites couches pré-durcies adjacentes et le durcissement de l'adhésif.

15. Procédé selon la revendication 14, dans lequel l'adhésif (56) est prévu dans une région centrale de la pile (36) pour fixer ensemble des parties centrales des couches pré-durcies (40) adjacentes.
